# FASCICULE DE BREVET EUROPEEN

(11) **EP 3 803 082 B1**
(45) Date de publication et mention de la délivrance du brevet: **01.03.2023**
(21) Numéro de dépôt: 19740642.4
(22) Date de dépôt: 07.06.2019
(51) Int. Cl.: F02C 7/08, F02C 6/02, F02C 9/42, F02C 7/36

(54) **SYSTÈME PROPULSIF ASYMÉTRIQUE À RÉCUPERATION DE CHALEUR**
ASYMETRISCHES ANTRIEBSSYSTEM MIT WÄRMERÜCKGEWINNUNG
ASYMMETRIC PROPULSION SYSTEM WITH RECUPERATION OF HEAT

(30) Priorité: 07.06.2018 FR 1854949
(43) Date de publication de la demande: 14.04.2021
(73) Titulaire: Safran Helicopter Engines, 64510 Bordes (FR)
(72) Inventeur: MOUTAUX, Antoine, Pascal, 77550 MOISSY-CRAMAYEL (FR); LAFARGUE, Olivier, 77550 MOISSY-CRAMAYEL (FR); KLONOWSKI, Thomas, 77550 MOISSY-CRAMAYEL (FR)
(74) Mandataire: Gevers & Orès
(86) Numéro de dépôt international: PCT/FR2019/051374
(87) Numéro de publication internationale: WO 2019/234368

(56) Documents cités:
- FR-A1- 2 962 488
- US-A- 4 197 699
- US-A- 4 644 744
- US-A1- 2003 094 001
- US-A1- 2016 003 144

## Description

### 1. Domaine technique de l'invention

L'invention concerne un système de propulsion d'un aéronef. En particulier, l'invention concerne un système de propulsion d'un aéronef, comprenant au moins deux turbomoteurs reliés à une boite de transmission principale, typiquement dans un hélicoptère bimoteur ou multi-moteur.

### 2. Arrière-plan technologique

L'état de la technique comporte notamment les documents US-A1-2016/003144, FR-A1-2 962 488, US-A-4 644 744, US-A1-2003/094001 et US-A-4 197 699.

Les hélicoptères bimoteurs ou multi-moteurs présentent de manière connue un système propulsif comprenant deux, trois ou plus de turbomoteurs, chaque turbomoteur comprenant un générateur de gaz et une turbine libre entraînée en rotation par le générateur de gaz, et solidaire d'un arbre de sortie. L'arbre de sortie de chaque turbine libre est adapté pour mettre en mouvement une boite de transmission de puissance (désignée ci-après par l'acronyme BTP), qui entraîne elle-même le rotor de l'hélicoptère équipé de pales à pas variable. Le générateur de gaz comprend au moins un compresseur et au moins une turbine reliés par un arbre, et une chambre de combustion recevant de l'air compressé par le compresseur et brûlant un mélange air/carburant pour former un gaz transmis à la turbine du générateur de gaz et la turbine libre.

En sortie de la turbine libre, une tuyère d'échappement permet l'évacuation des gaz de sortie, dit gaz d'échappement. Ces gaz d'échappement sont à température élevée. Il a ainsi été envisagé de récupérer une partie de l'énergie thermique de ces gaz d'échappement, notamment grâce à un échangeur thermique. En particulier, un échangeur thermique peut permettre d'utiliser l'énergie thermique des gaz d'échappement pour chauffer l'air entrant dans la chambre de combustion, en sortie du compresseur. Un turbomoteur équipé d'un tel échangeur thermique est appelé turbomoteur à cycle récupéré. Un tel turbomoteur a donc un meilleur rendement énergétique.

Toutefois, les échangeurs utilisés actuellement dans les turbomoteurs des systèmes propulsifs actuels sont soumis à des cycles thermiques dus à des variations rapides (transitoires) de puissance, qui provoquent des fortes contraintes thermiques et mécaniques. En particulier, les contraintes thermiques et mécaniques dues à ces transitoires nécessitent un dimensionnement et une tenue mécanique adéquat de l'échangeur pour limiter sa dégradation. L'échangeur est ainsi pénalisé car moins efficace, lourd et cher, et le turbomoteur est ainsi moins compétitif qu'un turbomoteur sans échangeur.

Les inventeurs ont ainsi cherché un moyen d'utiliser un échangeur dans un système propulsif de façon à ce qu'il soit compétitif par rapport aux systèmes propulsifs existants.

### 3. Objectifs de l'invention

L'invention vise à pallier au moins certains des inconvénients des systèmes propulsifs connus.

En particulier, l'invention vise à fournir, dans au moins un mode de réalisation de l'invention, un système propulsif permettant de récupérer une partie de l'énergie thermique des gaz d'échappement.

L'invention vise aussi à fournir, dans au moins un mode de réalisation, un système propulsif ne nécessitant pas un échangeur surdimensionné pour résister aux contraintes engendrées par les transitoires des turbomoteurs. Ainsi, l'invention vise à fournir, dans au moins un mode de réalisation, un système propulsif dans lequel les contraintes thermiques et mécaniques engendrées par les transitoires d'un turbomoteur dans l'échangeur thermique qui lui est associé sont limitées.

L'invention vise aussi à fournir, dans au moins un mode de réalisation de l'invention, un système propulsif performant.

L'invention vise aussi à fournir, dans au moins un mode de réalisation, un système propulsif pouvant gérer les phases transitoires avec au moins la même efficacité qu'un système propulsif classique.

L'invention vise aussi à fournir, dans au moins un mode de réalisation, un système propulsif fonctionnant en cas de panne d'un des turbomoteurs.

### 4. Exposé de l'invention

Pour ce faire, l'invention concerne un système propulsif d'un aéronef tel que défini dans la revendication 1.

Un système propulsif selon l'invention permet donc de profiter de la présence d'au moins deux turbomoteurs pour que l'un d'entre eux (le premier turbomoteur), soit équipé d'un échangeur thermique, en contrepartie d'une limitation de son accélération et de sa décélération afin de ne pas provoquer d'important transitoires de puissance au niveau de l'échangeur, et que l'autre turbomoteur (le deuxième turbomoteur) assure les besoins restant en fonctionnant normalement, sans les limitations d'accélération/décélération du premier turbomoteur relatives à la limitation des transitoires de puissance au niveau de l'échangeur thermique. Si le deuxième turbomoteur est équipé d'un échangeur thermique, celui-ci subira les dégradations évoquées précédemment, donc le deuxième turbomoteur n'est de préférence pas équipé d'un échangeur thermique.

Ainsi, le premier turbomoteur peut être utilisé à un niveau de puissance quasi constant pour fournir une partie de l'énergie propulsive nécessaire à l'aéronef, par exemple entre 50% et 100% de l'énergie propulsive en régime de croisière, de préférence autour 70% de l'énergie propulsive en régime de croisière. Le deuxième turbomoteur assurera la puissance nécessaire, soit pour atteindre l'énergie propulsive en régime de croisière, soit pour assurer des besoins ponctuels supplémentaires d'énergie (manoeuvre d'un hélicoptère, levage de charge, etc.).

En cas de panne du premier turbomoteur, le deuxième turbomoteur prend le relais et fourni l'intégralité de la puissance nécessaire pour prolonger le vol ou permettre un atterrissage en urgence. Du fait de la panne, la décélération du premier turbomoteur n'est plus contrôlée par le calculateur.

En cas de panne du deuxième turbomoteur, le calculateur arrête de limiter l'accélération et la décélération du premier turbomoteur afin que le premier turbomoteur puisse fournir toute la puissance nécessaire, même en cas de besoins ponctuels supplémentaires d'énergie, afin de garantir l'intégrité de l'aéronef et la sécurité de ses occupants (en évitant un accident). Cette fin de limitation se fait au détriment de l'échangeur qui peut être dégradé plus rapidement dans ce cas critique.

Les turbomoteurs sont du type décrit précédemment comprenant un générateur de gaz et une turbine libre. De préférence, l'échangeur récupère les gaz d'échappement en sortie de turbine libre, et permet de chauffer le gaz sortant du compresseur avant son entrée dans la chambre de combustion.

Le système propulsif peut comprendre plus de deux turbomoteurs, du moment qu'il comprend au moins un turbomoteur à échangeur avec accélération/décélération limité et au moins un deuxième turbomoteur « classique » sans échangeur. Les autres turbomoteurs sont soit à échangeur comme le premier turbomoteur, soit sans échangeur comme le deuxième turbomoteur.

Avantageusement et selon l'invention, les limites d'accélération et de décélération imposées par le calculateur au premier turbomoteur, lorsqu'aucun des turbomoteurs n'est en panne, sont prédéfinies en fonction de l'échangeur thermique de façon à limiter les contraintes thermiques et mécaniques dans ce dernier.

Avantageusement et selon l'invention, les limites d'accélération et de décélération peuvent être prédéfinies en fonction du dimensionnement et de la tenue mécanique de l'échangeur thermique.

Avantageusement et selon l'invention, les limites d'accélération et de décélération prédéfinies en fonction de l'échangeur thermique peuvent être inférieures à des limites physiques d'accélération et de décélération du premier turbomoteur, et l'échangeur thermique est inapte à supporter sans dégradation les transitoires de puissance correspondant auxdites limites physiques.

Les limites physiques d'accélération et de décélération du turbomoteur sont des limites physiques d'opérabilité du turbomoteur lors des transitoires. De façon connue en soi, ces limites physiques se traduisent par des butées d'accélération et de décélération qui sont imposées par le calculateur. Au-delà de ces limites physiques d'accélération et de décélération, le turbomoteur n'est plus opérable. L'opérabilité du turbomoteur est sa capacité à gérer les transitoires, et notamment sa capacité à accélérer et décélérer le turbomoteur tout en gérant les limitations d'accélération et de décélération.

Le calculateur du système propulsif selon l'invention peut utiliser, de manière connue en soi, des butées d'accélération et de décélération pour éviter un pompage ou une extinction d'un turbomoteur. De manière classique, des courbes qui comprennent notamment une ligne de fonctionnement stabilisé et une ligne de pompage caractérisent la relation entre un taux de compression et un débit massique réduit des gaz dans un compresseur d'un turbomoteur. Sur un graphe représentant cette relation, la ligne de fonctionnement stabilisé se situe sous la ligne de pompage, et chaque ligne forme une courbe croissante.

Lors des transitoires, la ligne d'accélération du turbomoteur et la ligne de décélération du turbomoteur s'écartent respectivement au-dessus et au-dessous de la ligne de fonctionnement stabilisé. Afin de ne pas risquer un pompage lors d'une accélération rapide du turbomoteur, la ligne d'accélération doit rester située entre la ligne de fonctionnement stabilisé et la ligne de pompage, en conservant une certaine marge sous la ligne de pompage. Cette marge est due au fait que la position en ordonnées de la ligne de pompage, sur le graphe reliant le taux de compression au débit massique réduit, peut varier notamment avec le vieillissement ou la détérioration du moteur, et en outre cette position n'est pas forcément la même pour deux moteurs identiques du fait de distorsions ou dispersions de fabrication. Une butée d'accélération dN/dt est généralement définie comme correspondant à une ligne, généralement une droite, conservant une marge supérieure ou égale à une marge minimale prédéfinie par rapport à la ligne de pompage. De la sorte, lors des transitoires, la ligne d'accélération peut atteindre la butée d'accélération, mais n'empiète pas sur la marge au pompage.

De façon similaire, sur le graphe reliant le taux de compression au débit massique réduit, la ligne de décélération du turbomoteur doit rester située entre la ligne de fonctionnement stabilisé et une ligne d'extinction de la chambre de combustion du turbomoteur. Une butée de décélération est généralement définie de sorte que lors d'une décélération rapide du turbomoteur, la ligne de décélération reste suffisamment au-dessus de la ligne d'extinction.

Le calculateur peut donc imposer au premier turbomoteur des butées d'accélération et de décélération correspondant aux limites physiques d'accélération et de décélération au-delà desquelles le turbomoteur risque un pompage ou une extinction. Avantageusement et selon l'invention, les limites d'accélération et de décélération prévues pour limiter les transitoires de puissance au niveau de l'échangeur thermique sont inférieures auxdites butées d'accélération et de décélération.

Avantageusement et selon l'invention, le système propulsif peut comprendre un moteur électrique relié au deuxième turbomoteur et configuré pour assister le deuxième turbomoteur lors d'une phase d'accélération, de démarrage et/ou de sortie de veille.

Selon cet aspect de l'invention, le moteur électrique permet d'assister le deuxième turbomoteur pour les phases transitoires. En particulier, plusieurs assistances sont possibles, le moteur pouvant être configuré pour assurer l'une ou plusieurs d'entre elles :
- une assistance à l'accélération/décélération : le deuxième turbomoteur étant le seul à assurer les transitoires et les variations brusques de demande en énergie, le moteur électrique peut permettre d'accélérer/décélérer le deuxième turbomoteur de façon plus important qu'il n'est capable de le faire seul ;
- une assistance au démarrage ou à la sortie de veille : dans les situations où le premier turbomoteur peut assurer seul l'apport en énergie propulsive, le deuxième turbomoteur peut être éteint ou en veille, selon plusieurs configurations possibles. Le moteur électrique peut ainsi, en cas d'augmentation de l'énergie demandée par l'aéronef ou en cas de panne du premier turbomoteur, redémarrer ou sortir de veille rapidement le deuxième turbomoteur. En particulier, si le premier turbomoteur est en panne, le deuxième turbomoteur doit pouvoir assurer l'apport en énergie suffisamment rapidement pour ne pas mettre en danger l'aéronef et ses occupants. Un démarrage classique du deuxième turbomoteur sans assistance peut ne pas être suffisamment rapide pour ces situations critiques. Un démarrage ou une sortie de veille assistée peut par exemple être effectuée en un tiers du temps sans assistance (par exemple 10 secondes pour un démarrage/sortie de veille assisté contre 30 secondes pour un démarrage/sortie de veille classique).

Les différents modes d'extinction ou de veille du deuxième turbomoteur sont par exemple :
- une extinction complète de la chambre de combustion et une mise à l'arrêt des arbres tournants. Dans ce mode, la consommation de carburant est nulle, mais le démarrage peut prendre un temps conséquent non compatible avec un éventuel besoin de démarrage rapide suite à la perte soudaine de l'autre turbomoteur ;
- une extinction complète de la chambre de combustion et une mise en mode « vireur » c'est-à-dire que les arbres restent en rotation. Dans ce mode, le moteur électrique entraîne le générateur de gaz à une vitesse de l'ordre de 10% de la vitesse nominale en fonctionnement, permettant des gains non négligeable sur le temps de rallumage d'urgence avec une consommation nulle de carburant ;
- une extinction partielle de la chambre de combustion et une mise en mode « super-ralenti ». Dans ce mode, le générateur de gaz est entraîné en partie par la combustion de gaz et de carburant dans la chambre de combustion et en partie par le moteur électrique. La consommation consomme peu de carburant mais permet une réactivation très rapide.

Le premier mode est considéré comme une extinction et les deux autres modes sont considérés comme une veille, selon deux niveaux différents. De préférence, le deuxième mode est mise en oeuvre dans l'invention lors de la mise en veille du deuxième turbomoteur.

Les turbomoteurs sont du type décrit précédemment comprenant un générateur de gaz et une turbine libre. Le moteur électrique qui peut être ajouté au deuxième turbomoteur entraîne l'arbre du générateur de gaz.

Avantageusement et selon l'invention, chaque turbomoteur comprend :
- un générateur de gaz comprenant un compresseur et une turbine reliées par un arbre, et une chambre de combustion recevant de l'air compressé par le compresseur et brûlant un mélange air/carburant pour former un gaz transmis à la turbine du générateur de gaz,
- la turbine libre entraînée en rotation par le générateur de gaz et solidaire d'un arbre de sortie, ledit arbre de sortie étant relié à la boite de transmission principale,
et l'échangeur thermique est configuré pour chauffer l'air compressé par le compresseur du premier turbomoteur via la partie d'énergie thermique récupérée.

Avantageusement et selon l'invention, chaque turbomoteur comprend une tuyère d'échappement, l'échangeur thermique étant configuré pour récupérer une partie de l'énergie thermique des gaz d'échappement au niveau de la tuyère d'échappement du premier turbomoteur.

L'invention concerne également un système propulsif d'un aéronef, comprenant une boite de transmission principale et N turbomoteurs reliés à la boite de transmission principale, N étant un nombre entier supérieur ou égal à 3, chaque turbomoteur comprenant une turbine libre,
caractérisé en ce que au moins un turbomoteur parmi les N turbomoteurs, dit premier turbomoteur, comprend un échangeur thermique configuré pour récupérer une partie de l'énergie thermique des gaz d'échappement en sortie de la turbine libre,
et en ce que le système propulsif comprend au moins un calculateur, configuré pour contrôler les N turbomoteurs et pour limiter l'accélération et la décélération dudit premier turbomoteur lorsqu'aucun des N turbomoteurs n'est en panne, de sorte à limiter les transitoires de puissance au niveau de l'échangeur thermique.

Avantageusement et selon l'invention, le système propulsif peut comprendre un moteur électrique relié à au moins un autre turbomoteur, dit deuxième turbomoteur, et configuré pour assister ledit deuxième turbomoteur lors d'une phase d'accélération, de démarrage et/ou de sortie de veille.

L'invention concerne également un procédé de gestion d'un système propulsif selon l'invention, caractérisé en ce qu'il comprend les étapes suivantes :
- une étape de contrôle de l'énergie fournie par le premier turbomoteur et le deuxième turbomoteur de sorte à assurer les besoins en énergie propulsives,
- durant un vol de croisière de l'aéronef, une étape d'extinction ou de mise en veille du deuxième turbomoteur, de sorte à ce que le premier turbomoteur fournisse l'intégralité de l'énergie propulsive,
- une étape de redémarrage ou de sortie de veille du deuxième turbomoteur s'il est éteint ou en veille et que l'énergie fournie par le premier turbomoteur n'est plus suffisante pour assurer les besoins en énergie propulsive.

Un procédé selon l'invention permet donc d'utiliser le système propulsif en vol de croisière en fonctionnement « un seul moteur opérant » (aussi appelé SEO pour *Single Engine Operative* en anglais) avec le premier turbomoteur. En cas de panne ou de besoin supplémentaire en énergie, le deuxième turbomoteur est remis en route (redémarré ou sortie de veille).

De préférence, l'étape de redémarrage ou de sortie de veille comprend une étape d'assistance par un moteur électrique relié au deuxième turbomoteur.

L'assistance via un moteur électrique permet d'assurer que le temps nécessaire pour que le deuxième moteur soit opérationnel est limité, notamment en cas d'urgence.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1a est une vue schématique d'un système propulsif selon un mode de réalisation de l'invention,
- la figure 1b est une vue schématique d'un système propulsif selon un autre mode de réalisation de l'invention,
- la figure 2 est un graphique représentant la puissance totale de la boite de transmission principale, la puissance du premier turbomoteur et la puissance du deuxième turbomoteur en fonction du temps dans une première phase de fonctionnement d'un système propulsif selon un mode de réalisation de l'invention,
- la figure 3 est un graphique représentant la puissance totale de la boite de transmission principale, la puissance du premier turbomoteur et la puissance du deuxième turbomoteur en fonction du temps dans une deuxième phase de fonctionnement d'un système propulsif selon un mode de réalisation de l'invention,
- la figure 4 est un graphique représentant la puissance totale de la boite de transmission principale, la puissance du premier turbomoteur et la puissance du deuxième turbomoteur en fonction du temps dans une troisième phase de fonctionnement d'un système propulsif selon un mode de réalisation de l'invention,
- la figure 5 est un graphique représentant les limites d'accélération du premier et du deuxième turbomoteur selon l'art antérieur et selon un système propulsif selon deux modes de réalisation de l'invention,
- la figure 6 est un graphique représentant la puissance totale de la boite de transmission principale, la puissance du premier turbomoteur et la puissance du deuxième turbomoteur en fonction du temps dans un premier mode de panne d'un système propulsif selon un mode de réalisation de l'invention,
- la figure 7 est un graphique représentant la puissance totale de la boite de transmission principale, la puissance du premier turbomoteur et la puissance du deuxième turbomoteur en fonction du temps dans un deuxième mode de panne d'un système propulsif selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

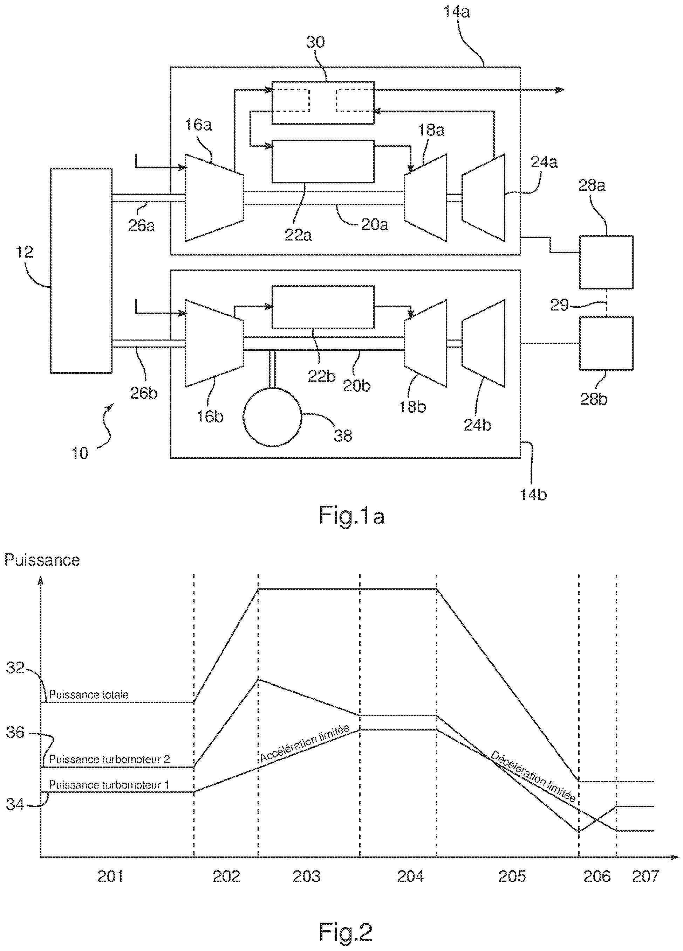

La figure 1a représente schématiquement un système 10 propulsif selon un mode de réalisation de l'invention servant à la propulsion d'un aéronef, par exemple un hélicoptère. Les figures 2, 3, 4, 6 et 7 représentent graphiquement différentes phases de fonctionnement d'un tel système propulsif.

Le système 10 propulsif comprend, de façon connue, un boite 12 de transmission principale et au moins deux turbomoteurs reliés à la boite 12 de transmission principale, ici deux turbomoteurs, respectivement un premier turbomoteur 14a et un deuxième turbomoteur 14b. Dans un hélicoptère, la boite de transmission principale est reliée notamment au rotor principal, entraînant celui-ci en rotation ce qui assure la propulsion de l'hélicoptère, et au rotor de queue pour le contrôle en lacet de l'appareil.

Chaque turbomoteur comprend de façon connue un générateur de gaz formé d'un compresseur (référencé respectivement 16a pour le premier turbomoteur 14a et 16b pour le deuxième turbomoteur 14b) et d'une turbine (référencée respectivement 18a pour le premier turbomoteur 14a et 18b pour le deuxième turbomoteur 14b) reliés par un arbre (référencé respectivement 20a pour le premier turbomoteur 14a et 20b pour le deuxième turbomoteur 14b), et une chambre de combustion (référencé respectivement 22a pour le premier turbomoteur 14a et 22b pour le deuxième turbomoteur 14b) recevant de l'air compressé par le compresseur et brûlant un mélange air/carburant pour former un gaz transmis à la turbine du générateur de gaz. Chaque turbomoteur comprend également une turbine libre (référencée respectivement 24a pour le premier turbomoteur 14a et 24b pour le deuxième turbomoteur 14b) entraînée en rotation par le générateur de gaz et solidaire d'un arbre de sortie (référencé respectivement 26a pour le premier turbomoteur 14a et 26b pour le deuxième turbomoteur 14b), ledit arbre de sortie étant relié à la boite 12 de transmission principale. Chaque turbomoteur comprend également une tuyère d'échappement. En sortie de la turbine libre, les gaz d'échappement sont évacués par la tuyère d'échappement.

Le système 10 propulsif comprend en outre au moins un calculateur, de préférence un calculateur dédié à chaque turbomoteur, ici un premier calculateur 28a relié au premier turbomoteur 14a et un deuxième calculateur 28b relié au deuxième turbomoteur 14b, configurés pour contrôler les deux turbomoteurs, notamment pour déterminer l'énergie que doit fournir chaque turbomoteur en fonction de l'énergie requise pour le fonctionnement du système 10 propulsif. Les calculateurs 28a et 28b peuvent être reliés entre eux par une liaison 29 numérique pour effectuer un échange de données en cas de fonctionnement coopératif des deux turbomoteurs.

Le système 10 propulsif selon un mode de réalisation de l'invention diffère des systèmes propulsifs connus en ce que le premier turbomoteur 14a comprend un échangeur 30 thermique permettant de récupérer une partie de l'énergie thermique des gaz d'échappement en aval de la turbine libre du premier turbomoteur. L'échangeur 30 thermique peut ainsi être disposé au niveau de la tuyère d'échappement du premier turbomoteur, où une partie des gaz d'échappement peut être prélevée dans la tuyère pour venir alimenter l'échangeur 30 thermique.

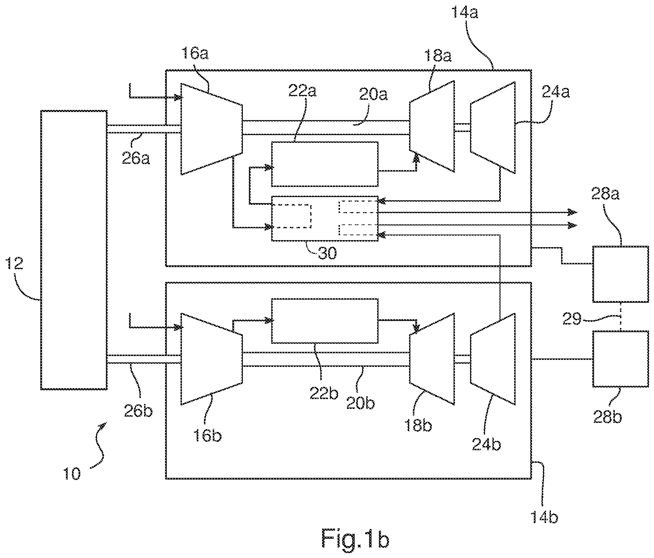

Dans un autre mode de réalisation, représenté sur la figure 1b, l'échangeur thermique 30 récupère une partie de l'énergie thermique des deux turbomoteurs. Autrement dit, l'échangeur thermique 30 est agencé pour récupérer une partie de l'énergie thermique des gaz d'échappement en aval de la turbine libre du premier turbomoteur 14a et une partie de l'énergie thermique des gaz d'échappement en aval de la turbine libre du deuxième turbomoteur 14b. L'échangeur 30 thermique peut être disposé au niveau de la tuyère d'échappement du premier turbomoteur 14a, et à proximité de la tuyère d'échappement du deuxième turbomoteur 14b.

L'échangeur thermique permet de réchauffer les gaz compressés par le compresseur 16a avant d'entrée dans la chambre 22a de combustion. Ce chauffage des gaz compressés permet d'améliorer l'efficacité de la combustion dans la chambre 22a de combustion et donc l'efficacité globale du premier turbomoteur 14a.

Toutefois, comme expliqué précédemment, l'échangeur thermique est sensible aux variations brutales dues aux régimes transitoires de vol dans lesquels l'énergie propulsive nécessaire varie fortement. Le premier calculateur 28a est ainsi configuré pour limiter l'accélération et la décélération du premier turbomoteur 14a afin de permettre d'utiliser l'échangeur 30 thermique sans dégradations. Avantageusement, les limites d'accélération et de décélération imposées par le calculateur au premier turbomoteur sont prédéfinies en fonction de l'échangeur thermique de façon à limiter les contraintes thermiques et mécaniques dans ce dernier. Plus précisément, ces limites d'accélération et de décélération sont prédéfinies en fonction notamment du dimensionnement et de la tenue mécanique de l'échangeur thermique. Un compromis est recherché pour adopter des limites d'accélération et de décélération suffisamment basses en valeur absolue, afin de pouvoir utiliser sur un turbomoteur un échangeur qui ne soit pas surdimensionné pour résister aux contraintes engendrées par les transitoires du turbomoteur, tout en prévoyant que ces limites ne soient pas non plus trop basses afin de conserver une opérabilité suffisante du turbomoteur en particulier durant la phase de croisière d'un vol. Un objectif de l'invention est de permettre un turbomoteur à cycle récupéré procurant des gains en consommation de carburant qui ne sont pas annulés par l'augmentation de masse due à la présence de l'échangeur. Ainsi, en permettant de ne pas surdimensionner l'échangeur, l'invention permet de limiter sa masse dans une mesure compatible avec l'obtention de gains en consommation de carburant du turbomoteur à cycle récupéré.

Le deuxième turbomoteur 14b est quant à lui un turbomoteur « normal » en ce qu'il n'est pas à cycle récupéré, et ne comprend donc pas un échangeur thermique tel que celui équipant le premier turbomoteur 14a. Ainsi, le deuxième calculateur 28b du deuxième turbomoteur 14b a des limites d'accélérations moins contraignantes que le premier turbomoteur 14a. Le deuxième turbomoteur 14b assure ainsi les besoins transitoires en énergie, comme par exemple visible sur la figure 2 représentant par un graphique la puissance totale (courbe référencée 32) de la boite de transmission principale, la puissance du premier turbomoteur (courbe référencée 34) et la puissance du deuxième turbomoteur (courbe référencée 36) en fonction du temps dans une première phase de fonctionnement d'un système propulsif selon un mode de réalisation de l'invention.

Dans une première étape 201, la puissance totale délivrée par la boite 12 de transmission principale est la somme des deux puissances délivrées par les turbomoteurs. Dans une deuxième étape 202, les besoins en énergie propulsive augmentent : les deux turbomoteurs vont donc accélérer pour fournir davantage d'énergie : leurs puissances délivrées augmentent, de même que la puissance totale. Du fait de la limitation par le premier calculateur 28a, la puissance délivrée par le premier turbomoteur 14a augmente doucement, et la puissance délivrée par le deuxième turbomoteur augmente plus rapidement, de sorte que la puissance totale nécessaire soit atteinte rapidement. À la fin de la deuxième étape, la puissance totale nécessaire est atteinte. Lors de la troisième étape 203, le premier turbomoteur 14a continue d'accélérer jusqu'à atteindre un niveau prédéterminé, de sorte à ce que les turbomoteurs délivrent une puissance similaire. Ainsi, pour rester à niveau de puissance totale constant, le deuxième turbomoteur 14b décélère, jusqu'à une quatrième étape 204 où les puissances délivrées par les turbomoteurs sont constantes.

Dans le cas d'une réduction de l'énergie propulsive demandée, le fonctionnement est similaire : dans une cinquième étape 205, les deux turbomoteurs réduisent la puissance délivrée, la décélération du premier turbomoteur 14a étant limitée ; dans une sixième étape 206, à puissance totale constante, le premier turbomoteur 14a continue de décélérer tandis que le deuxième turbomoteur accélère, et dans une septième étape 207, les puissances délivrées sont constantes.

Les accélérations et décélération du deuxième turbomoteur 14b doivent compenser les limitations du premier turbomoteur 14a. Pour assister le deuxième turbomoteur, le système propulsif peut comprendre un moteur 38 électrique, visible sur la figure 1a, relié à l'arbre du générateur de gaz de sorte à pouvoir accélérer ou décélérer le deuxième turbomoteur.

Selon un autre mode de réalisation non représenté, le moteur électrique n'est pas présent, notamment si le deuxième turbomoteur 14b est capable d'assurer luimême les accélérations et décélérations.

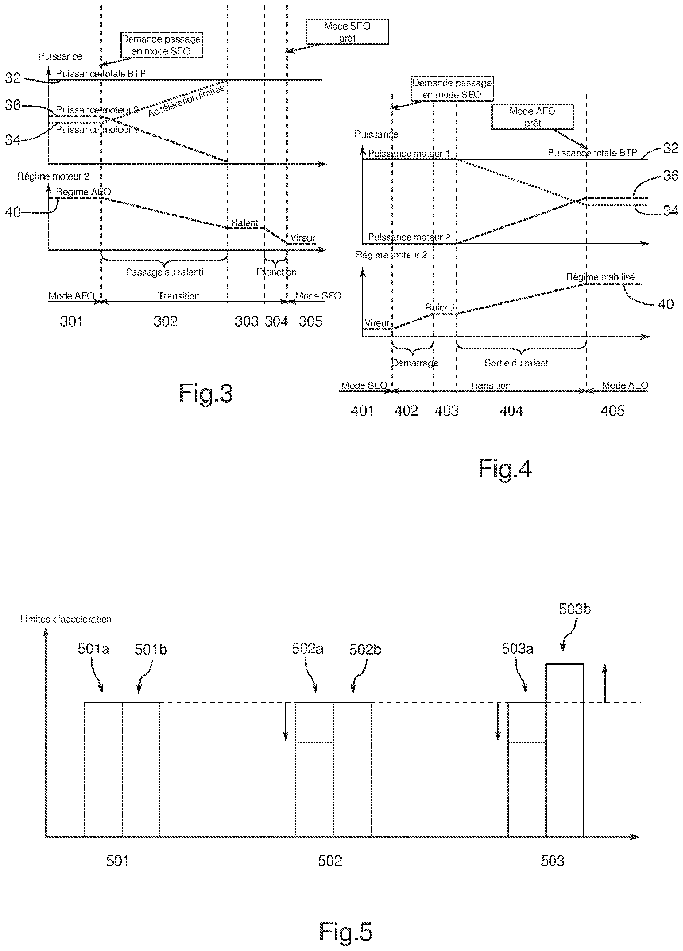

La figure 3 est un graphique représentant la puissance totale de la boite de transmission principale, la puissance du premier turbomoteur et la puissance du deuxième turbomoteur en fonction du temps dans une deuxième phase de fonctionnement d'un système propulsif selon un mode de réalisation de l'invention. Les courbes sont référencées respectivement 32, 34 et 36 comme dans la figure 2.

Ce graphique correspond à un procédé de mise en veille du deuxième turbomoteur, dans laquelle la chambre 22b de combustion du deuxième turbomoteur 14b est éteinte et l'arbre 20b du générateur de gaz est mis en mode « vireur », c'est-à-dire entraîné en rotation lente par le moteur 38 électrique. Le graphique représente également le régime du deuxième turbomoteur en fonction du temps.

En particulier, en partant d'une étape 301 initiale dans laquelle les deux turbomoteurs sont en fonctionnement (mode AEO pour *All Engine Operative* en anglais), le procédé comprend une étape 302 de passage au ralenti est mise en route dans laquelle le régime du deuxième turbomoteur est réduit, ainsi que sa puissance délivrée. Le premier turbomoteur est accéléré pour compenser cette perte de puissance de sorte à ce que la puissance totale soit constante (l'accélération restant limitée par les calculateurs). Une étape 303 de ralenti est atteinte lorsque le deuxième turbomoteur ne délivre plus de puissance. Une étape 304 d'extinction réduit encore le régime par extinction de la chambre de combustion, jusqu'à atteindre dans l'étape 305 finale un régime du mode vireur dans lequel le deuxième turbomoteur n'est entraîné que par le moteur électrique jusqu'à sa sortie de veille. La puissante totale est délivrée uniquement par le premier turbomoteur, le système propulsif est donc en mode SEO.

Dans un procédé selon un autre mode de réalisation non représenté, le turbomoteur peut être ensuite éteint en arrêtant de tourner l'arbre du générateur de gaz jusqu'à atteindre un régime nul.

La figure 4 est un graphique représentant la puissance totale de la boite de transmission principale, la puissance du premier turbomoteur et la puissance du deuxième turbomoteur en fonction du temps dans une troisième phase de fonctionnement d'un système propulsif selon un mode de réalisation de l'invention. Les courbes sont référencées respectivement 32, 34 et 36 comme dans les figures 2 et 3.

Ce graphique correspond à un procédé de sortie de veille du deuxième turbomoteur. Le graphique représente également le régime 40 du deuxième turbomoteur en fonction du temps. Il correspond ainsi à une phase inverse de la figure 3. En particulier :
- l'étape 401 initiale correspond au deuxième turbomoteur en veille et au premier turbomoteur qui délivre l'ensemble de la puissance du système propulsif. L'étape correspond à la situation de l'étape 305 sur la figure 3 ;
- l'étape 402 de démarrage correspond à l'allumage de la chambre de combustion du deuxième turbomoteur, jusqu'à atteindre un niveau ralenti ;
- l'étape 403 de ralenti correspond au deuxième turbomoteur au ralenti, sans fourniture de puissance ;
- l'étape 404 de sortie du ralenti correspond à une accélération du deuxième turbomoteur et une décélération limitée du premier turbomoteur ;
- l'étape 405 dans laquelle les deux turbomoteurs sont fonctionnels (mode AEO), correspondant à l'état 301 initial sur la figure 3.

La figure 5 est un graphique représentant les limites d'accélération du premier et du deuxième turbomoteur selon l'art antérieur et selon un système propulsif selon deux modes de réalisation de l'invention.

Dans la première courbe 501 représentant l'art antérieur, les limites d'accélération des deux turbomoteurs (501a pour le premier turbomoteur et 501b pour le deuxième turbomoteur) sont égales : ces deux turbomoteurs sont identiques. Les limites d'accélération sont principalement des limites physiques des turbomoteurs. En particulier, la limite physique d'accélération de chaque turbomoteur peut être une limite physique d'opérabilité du turbomoteur lors des transitoires d'accélération, de façon à éviter notamment un pompage d'un compresseur du turbomoteur. Dans ce cas et de façon connue en soi, une butée d'accélération correspondant à la limite physique d'opérabilité à l'accélération est imposée par le calculateur au turbomoteur.

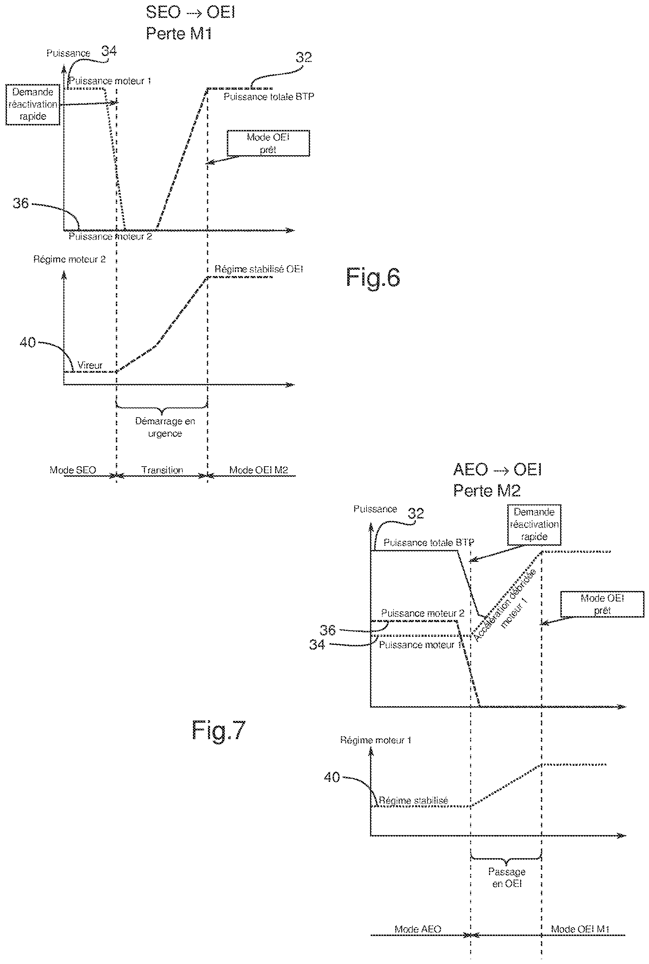

La deuxième courbe 502 représente un premier mode de réalisation de l'invention, dans lequel le premier turbomoteur comprend l'échangeur et est limité en accélération (voir courbe 502a), et le deuxième turbomoteur est « classique », c'est-à-dire sans moteur électrique d'assistance (voir courbe 502b). Le deuxième turbomoteur a une limite d'accélération égale à l'art antérieur, et le premier turbomoteur a un seuil plus faible du fait de la limitation par son calculateur. Ce seuil est préférablement prédéfini en fonction de l'échangeur thermique de façon à limiter les contraintes thermiques et mécaniques dans ce dernier. En d'autres termes, l'échangeur thermique ne subit pas de dégradation significative tant que l'accélération est limitée à ce seuil. Dans le cas où une butée d'accélération correspondant à une limite physique d'opérabilité est imposée par le calculateur au turbomoteur, ce seuil plus faible prédéfini est inférieur au seuil de la butée d'accélération susmentionnée. Pour ne pas avoir à surdimensionner l'échangeur thermique, celui-ci est prévu inapte à supporter sans dégradation significative les transitoires de puissance correspondant auxdites limites physiques. Toutefois, comme représenté dans la zone hachurée, le premier turbomoteur peut retrouver son accélération « classique » en débridant celle-ci dans une situation d'urgence lorsque le deuxième turbomoteur est en panne (voir description figure 7 plus loin). Il est donc possible que l'échangeur thermique subisse une dégradation significative dans une telle situation d'urgence.

La troisième courbe 503 représente un deuxième mode de réalisation de l'invention, dans lequel le premier turbomoteur comprend l'échangeur et est limité en accélération (voir courbe 503a), et le deuxième turbomoteur est assisté par un moteur électrique : la limite d'accélération du deuxième turbomoteur est alors supérieure à un turbomoteur classique grâce à l'assistance du moteur électrique (voir courbe 503b). Comme pour le premier mode de réalisation, comme représenté dans la zone hachurée, le premier turbomoteur peut retrouver son accélération « classique » en débridant celle-ci dans une situation d'urgence lorsque le deuxième turbomoteur est en panne (voir description figure 7 plus loin).

La figure 6 est un graphique représentant la puissance totale de la boite de transmission principale, la puissance du premier turbomoteur et la puissance du deuxième turbomoteur en fonction du temps dans un premier mode de panne d'un système propulsif selon un mode de réalisation de l'invention. Les courbes sont référencées respectivement 32, 34 et 36 comme dans les figures 2, 3 et 4. La figure 6 représente également le régime du deuxième turbomoteur pendant ce mode de panne.

Ce premier mode de panne correspond à une panne du premier turbomoteur dans un mode de fonctionnement SEO tel que décrit en référence avec les figures 3 et 4, c'est-à-dire que seul le premier turbomoteur fournissait de la puissance propulsive au moment de la panne.

Dès que la perte du premier turbomoteur est détectée, une commande de réactivation rapide est envoyée au deuxième turbomoteur. Le deuxième turbomoteur est ainsi fortement accéléré jusqu'à atteindre un niveau de puissance égale à la puissance précédemment délivrée par le premier turbomoteur avant sa panne. Le deuxième turbomoteur fournit ainsi l'intégralité de la puissante totale de la boite de transmission principale. Ce mode de fonctionnement est appelé mode OEI pour *One Engine Inoperative* en anglais.

La réactivation rapide peut par exemple être effectuée grâce à l'assistance du moteur électrique, par exemple alimenté pour des sources d'énergies de secours telles que super-capacité, pile thermique, batteries, etc., voir demandes de brevets WO2015145042 et WO2015145031. En l'absence du moteur électrique, la réactivation rapide peut aussi être effectuée par exemple via un dispositif pyrotechnique approprié, comme par exemple décrit dans la demande WO2013160590.

La figure 7 est un graphique représentant la puissance totale de la boite de transmission principale, la puissance du premier turbomoteur et la puissance du deuxième turbomoteur en fonction du temps dans un deuxième mode de panne d'un système propulsif selon un mode de réalisation de l'invention. Les courbes sont référencées respectivement 32, 34 et 36 comme dans les figures 2, 3, 4 et 6. La figure 7 représente également le régime du premier turbomoteur pendant ce mode de panne.

Ce deuxième mode de panne correspond à une panne du deuxième turbomoteur dans un mode de fonctionnement AEO tel que décrit en référence avec la figure 2, c'est-à-dire que les deux turbomoteurs fournissaient de la puissance propulsive à la boite de transmission principale au moment de la panne.

En cas de panne du deuxième turbomoteur, le premier turbomoteur doit assurer seul les besoins en puissance totale de la boite de transmission principale. Ainsi, il doit accélérer pour délivrer la puissance nécessaire pour compenser la perte du deuxième turbomoteur. Or, l'accélération de celui-ci est normalement limitée par le calculateur. En situation d'urgence comme celle-ci, puisqu'un turbomoteur est en panne, le premier calculateur 28a va lever la limitation d'accélération/décélération du premier turbomoteur de sorte à ce qu'il puisse fournir la puissance nécessaire rapidement pour ne pas mettre en danger l'aéronef et ses occupants. L'échangeur sera ainsi susceptible de subir un endommagement plus rapide par la variation rapide de puissance délivrée (et de température).

Dans le mode SEO, si le deuxième turbomoteur est en veille et qu'il tombe en panne, le premier turbomoteur délivre déjà l'intégralité de la puissance totale. Toutefois, si les besoins de puissance augmentent, le premier turbomoteur devra assurer ces besoins et ainsi le calculateur pourra aussi lever la limitation d'accélération si besoin.

L'invention ne se limite pas aux seuls modes de réalisation décrits. En particulier, l'invention concerne aussi les systèmes propulsifs multi-moteurs ayant plus de deux turbomoteurs.

Un tel système propulsif comprend une boite de transmission principale et au moins trois turbomoteurs reliés à la boite de transmission principale. Chaque turbomoteur peut comprendre une turbine libre.

Au moins un des turbomoteurs comprend un échangeur thermique configuré pour récupérer une partie de l'énergie thermique des gaz d'échappement en sortie de la turbine libre.

Un moteur électrique peut être relié à au moins un autre des turbomoteurs et être configuré pour assister ce turbomoteur lors d'une phase d'accélération, de démarrage et/ou de sortie de veille.

Le système propulsif comprend au moins un calculateur, configuré pour contrôler les turbomoteurs et pour limiter l'accélération et la décélération du turbomoteur comprenant l'échangeur thermique lorsqu'aucun des turbomoteurs n'est en panne, de sorte à limiter les transitoires de puissance au niveau de l'échangeur thermique.

Autrement dit, le système propulsif comprend un premier turbomoteur et un deuxième turbomoteur comme décrits précédemment, ainsi que d'autres turbomoteurs qui peuvent être soit avec échangeur et accélération limité (comme le premier turbomoteur), soit sans échangeur et avec ou sans moteur électrique d'assistance (comme le deuxième turbomoteur).

## Revendications

1. Système propulsif d'un aéronef, comprenant une boite (12) de transmission principale et au moins deux turbomoteurs reliés à la boite (12) de transmission principale, respectivement un premier turbomoteur (14a) et un deuxième turbomoteur (14b), chaque turbomoteur comprenant une turbine libre (24a, 24b),
dans lequel le premier turbomoteur (14a) comprend un échangeur (30) thermique configuré pour récupérer une partie de l'énergie thermique des gaz d'échappement en sortie de la turbine libre (24a, 24b),
**caractérisé en ce que** le système propulsif comprend au moins un calculateur (28a, 28b), configuré pour contrôler les deux turbomoteurs et pour limiter l'accélération et la décélération du premier turbomoteur (14a) lorsqu'aucun des turbomoteurs n'est en panne, de sorte à limiter les transitoires de puissance au niveau de l'échangeur (30) thermique,
et **en ce que** les limites d'accélération et de décélération imposées par le calculateur (28a, 28b) au premier turbomoteur (14a), lorsqu'aucun des turbomoteurs n'est en panne, sont prédéfinies en fonction de l'échangeur (30) thermique de façon à limiter les contraintes thermiques et mécaniques dans ce dernier.

2. Système propulsif selon la revendication 1, **caractérisé en ce que** les limites d'accélération et de décélération sont prédéfinies en fonction du dimensionnement et de la tenue mécanique de l'échangeur (30) thermique.

3. Système propulsif selon la revendication 1 ou 2, **caractérisé en ce que** les limites d'accélération et de décélération prédéfinies en fonction de l'échangeur (30) thermique sont inférieures à des limites physiques d'accélération et de décélération du premier turbomoteur (14a), et l'échangeur (30) thermique est inapte à supporter sans dégradation les transitoires de puissance correspondant auxdites limites physiques.

4. Système propulsif selon l'une quelconque des revendications précédentes, **caractérisé en ce que** le calculateur (28a, 28b) impose au premier turbomoteur (14a) des butées d'accélération et de décélération correspondant à des limites physiques d'accélération et de décélération du premier turbomoteur (14a) au-delà desquelles le turbomoteur risque un pompage ou une extinction, et les limites d'accélération et de décélération prévues pour limiter les transitoires de puissance au niveau de l'échangeur (30) thermique sont inférieures auxdites butées d'accélération et de décélération.

5. Système propulsif selon l'une des revendications précédentes, **caractérisé en ce qu'**il comprend un moteur (38) électrique relié au deuxième turbomoteur (14b) et configuré pour assister le deuxième turbomoteur (14b) lors d'une phase d'accélération, de démarrage et/ou de sortie de veille.

6. Système propulsif selon l'une des revendications précédentes, **caractérisé en ce que** chaque turbomoteur comprend :
- un générateur de gaz comprenant un compresseur (16a, 16b) et une turbine (18a, 18b) reliées par un arbre (20a, 20b), et une chambre (22a, 22b) de combustion recevant de l'air compressé par le compresseur (16a, 16b) et brûlant un mélange air/carburant pour former un gaz transmis à la turbine (18a, 18b) du générateur de gaz,
- la turbine (24a, 24b) libre entrainée en rotation par le générateur de gaz et solidaire d'un arbre (26a, 26b) de sortie, ledit arbre de sortie étant relié à la boite (12) de transmission principale,
et **en ce que** l'échangeur (30) thermique est configuré pour chauffer l'air compressé par le compresseur (16a) du premier turbomoteur (14a) via la partie d'énergie thermique récupérée.

7. Système propulsif selon l'une des revendications précédentes, **caractérisé en ce que** chaque turbomoteur comprend une tuyère d'échappement, l'échangeur (30) thermique étant configuré pour récupérer une partie de l'énergie thermique des gaz d'échappement au niveau de la tuyère d'échappement du premier turbomoteur (14a).

8. Système propulsif selon l'une des revendications précédentes, **caractérisé en ce que** l'échangeur (30) thermique est configuré pour récupérer une partie de l'énergie thermique des gaz d'échappement des deux turbomoteurs (14a, 14b).

9. Système propulsif selon l'une des revendications précédentes, comprenant N turbomoteurs reliés à la boite de transmission principale, N étant un nombre entier supérieur ou égal à 3, chaque turbomoteur comprenant une turbine libre,
dans lequel au moins un turbomoteur parmi les N turbomoteurs, dit premier turbomoteur, comprend un échangeur thermique configuré pour récupérer une partie de l'énergie thermique des gaz d'échappement en sortie de la turbine libre,
et en ce que le calculateur est configuré pour contrôler les N turbomoteurs et pour limiter l'accélération et la décélération dudit premier turbomoteur lorsqu'aucun des N turbomoteurs n'est en panne, de sorte à limiter les transitoires de puissance au niveau de l'échangeur thermique.

10. Système propulsif selon la revendication 9, **caractérisé en ce qu'**il comprend un moteur électrique relié à au moins un autre turbomoteur, dit deuxième turbomoteur, et configuré pour assister ledit deuxième turbomoteur lors d'une phase d'accélération, de démarrage et/ou de sortie de veille.

11. Procédé de gestion d'un système (10) propulsif selon l'une des revendications 1 à 10, **caractérisé en ce qu'**il comprend les étapes suivantes :
- une étape de contrôle de l'énergie fournie par le premier turbomoteur (14a) et le deuxième turbomoteur (14b) de sorte à assurer les besoins en énergie propulsives,
- durant un vol de croisière de l'aéronef, une étape d'extinction ou de mise en veille du deuxième turbomoteur (14b), de sorte à ce que le premier turbomoteur (14a) fournisse l'intégralité de l'énergie propulsive,
- une étape de redémarrage ou de sortie de veille du deuxième turbomoteur (14b) s'il est éteint ou en veille et que l'énergie fournie par le premier turbomoteur (14a) n'est plus suffisante pour assurer les besoins en énergie propulsive.

12. Procédé de gestion selon la revendication 11, **caractérisé en ce que** l'étape de redémarrage ou de sortie de veille comprend une étape d'assistance par un moteur (38) électrique relié au deuxième turbomoteur (14b).

## Patentansprüche

1. Antriebssystem eines Luftfahrzeugs, umfassend ein Hauptgetriebe (12) und mindestens zwei mit dem Hauptgetriebe (12) verbundene Turbomotoren, jeweils einen ersten Turbomotor (14a) und einen zweiten Turbomotor (14b), wobei jeder Turbomotor eine Freilaufturbine (24a, 24b) umfasst,
wobei der erste Turbomotor (14a) einen Wärmetauscher (30) umfasst, der konfiguriert ist, um einen Teil der Wärmeenergie der Abgase am Ausgang der Freilaufturbine (24a, 24b) zurückzugewinnen,
**dadurch gekennzeichnet, dass** das Antriebssystem mindestens einen Rechner (28a, 28b) umfasst, der konfiguriert ist, um die beiden Turbomotoren zu steuern und um die Beschleunigung und die Abbremsung des ersten Turbomotors (14a) zu begrenzen, wenn keiner der Turbomotoren ausfällt, sodass die Leistungstransienten im Bereich des Wärmetauschers (30) begrenzt werden,
und dass die Beschleunigungs- und Abbremsungsgrenzen, die von dem Rechner (28a, 28b) dem ersten Turbomotor (14a) auferlegt werden, wenn keiner der Turbomotoren ausfällt, in Abhängigkeit von dem Wärmetauscher (30) derart vordefiniert sind, dass die thermischen und mechanischen Belastungen in demselben begrenzt werden.

2. Antriebssystem nach Anspruch 1, **dadurch gekennzeichnet, dass** die Beschleunigungs- und Abbremsungsgrenzen in Abhängigkeit von der Dimensionierung und der mechanischen Festigkeit des Wärmetauschers (30) vordefiniert sind.

3. Antriebssystem nach Anspruch 1 oder 2, **dadurch gekennzeichnet, dass** die vordefinierten Beschleunigungs- und Abbremsungsgrenzen in Abhängigkeit von dem Wärmetauscher (30) kleiner sind als physikalische Beschleunigungs- und Abbremsungsgrenzen des ersten Turbomotors (14a), und der Wärmetauscher (30) nicht in der Lage ist, die Leistungstransienten, die den physikalischen Grenzen entsprechen, ohne Degradation zu bewältigen.

4. Antriebssystem nach einem der vorstehenden Ansprüche, **dadurch gekennzeichnet, dass** der Rechner (28a, 28b) dem ersten Turbomotor (14a) Beschleunigungs- und Abbremsungsanschläge auferlegt, die physikalischen Beschleunigungs- und Abbremsungsgrenzen des ersten Turbomotors (14a) entsprechen, oberhalb derer der Turbomotor ein Pumpen oder ein Abschalten riskiert, und die Beschleunigungs- und Abbremsungsgrenzen, die zur Begrenzung von Leistungstransienten im Bereich des Wärmetauschers (30) vorgesehen sind, niedriger sind als die Beschleunigungs- und Abbremsungsanschläge.

5. Antriebssystem nach einem der vorstehenden Ansprüche, **dadurch gekennzeichnet, dass** es einen Elektromotor (38) umfasst, der mit dem zweiten Turbomotor (14b) verbunden und konfiguriert ist, um den zweiten Turbomotor (14b) während einer Beschleunigungsphase, einer Anlaufphase und/oder einer Phase des Verlassens der Standby-Betriebsart zu unterstützen.

6. Antriebssystem nach einem der vorstehenden Ansprüche, **dadurch gekennzeichnet, dass** jeder Turbomotor Folgendes umfasst:
- einen Gasgenerator, umfassend einen Verdichter (16a, 16b) und eine Turbine (18a, 18b), die durch eine Welle (20a, 20b) verbunden sind, und eine Brennkammer (22a, 22b), die durch den Verdichter (16a, 16b) verdichtete Luft aufnimmt und ein Luft/Kraftstoff-Gemisch verbrennt, um ein Gas zu bilden, das an die Turbine (18a, 18b) des Gasgenerators weitergeleitet wird,
- die Freilaufturbine (24a, 24b), die durch den Gasgenerator in Drehung versetzt wird und fest mit einer Ausgangswelle (26a, 26b) verbunden ist, wobei die Ausgangswelle mit dem Hauptgetriebe (12) verbunden ist,
und dass der Wärmetauscher (30) konfiguriert ist, um die durch den Verdichter (16a) des ersten Turbomotors (14a) verdichtete Luft über den Teil der zurückgewonnenen Wärmeenergie zu erwärmen.

7. Antriebssystem nach einem der vorstehenden Ansprüche, **dadurch gekennzeichnet, dass** jeder Turbomotor eine Abgasdüse umfasst, wobei der Wärmetauscher (30) konfiguriert ist, um einen Teil der Wärmeenergie der Abgase im Bereich der Abgasdüse des ersten Turbomotors (14a) zurückzugewinnen.

8. Antriebssystem nach einem der vorstehenden Ansprüche, **dadurch gekennzeichnet, dass** der Wärmetauscher (30) konfiguriert ist, um einen Teil der Wärmeenergie der Abgase der beiden Turbomotoren (14a, 14b) zurückzugewinnen.

9. Antriebssystem nach einem der vorstehenden Ansprüche, umfassend N Turbomotoren, die mit dem Hauptgetriebe verbunden sind, wobei N eine ganze Zahl größer als oder gleich 3 ist, wobei jeder Turbomotor eine Freilaufturbine umfasst,
wobei mindestens ein Turbomotor unter den N Turbomotoren, der sogenannte erste Turbomotor, einen Wärmetauscher umfasst, der konfiguriert ist, um einen Teil der Wärmeenergie der Abgase am Ausgang der Freilaufturbine zurückzugewinnen,
und dass der Rechner konfiguriert ist, um die N Turbomotoren zu steuern und um die Beschleunigung und die Abbremsung des ersten Turbomotors zu begrenzen, wenn keiner der N Turbomotoren ausfällt, sodass die Leistungstransienten im Bereich des Wärmetauschers begrenzt werden.

10. Antriebssystem nach Anspruch 9, **dadurch gekennzeichnet, dass** es einen Elektromotor umfasst, der mit mindestens einem weiteren Turbomotor, dem sogenannten zweiten Turbomotor, verbunden und konfiguriert ist, um den zweiten Turbomotor während einer Beschleunigungsphase, einer Anlaufphase und/oder einer Phase des Verlassens der Standby-Betriebsart zu unterstützen.

11. Verfahren zur Verwaltung eines Antriebssystems (10) nach einem der Ansprüche 1 bis 10, **dadurch gekennzeichnet, dass** es die folgenden Schritte umfasst:
- einen Schritt zur Steuerung der von dem ersten Turbomotor (14a) und dem zweiten Turbomotor (14b) gelieferten Energie, um den Antriebsenergiebedarf sicherzustellen,
- während eines Reiseflugs des Luftfahrzeugs, einen Schritt der Abschaltung oder der Versetzung in die Standby-Betriebsart des zweiten Turbomotors (14b), sodass der erste Turbomotor (14a) die Gesamtheit der Antriebsenergie liefert,
- einen Schritt des Neustarts oder des Verlassens der Standby-Betriebsart des zweiten Turbomotors (14b), wenn er ausgeschaltet ist oder in der Standby-Betriebsart arbeitet und wenn die von dem ersten Turbomotor (14a) gelieferte Energie nicht mehr ausreicht, um den Antriebsenergiebedarf sicherzustellen.

12. Verfahren zur Verwaltung nach Anspruch 11, **dadurch gekennzeichnet, dass** der Schritt des Neustarts oder des Verlassens der Standby-Betriebsart einen Schritt der Unterstützung durch einen Elektromotor (38) umfasst, der mit dem zweiten Turbomotor (14b) verbunden ist.

## Claims

1. A propulsion system of an aircraft, comprising a main gearbox (12) and at least two turboshaft engines connected to the main gearbox (12), respectively a first turboshaft engine (14a) and a second turboshaft engine (14b), each turboshaft engine comprising a free turbine (24a, 24b),
wherein the first turboshaft engine (14a) comprises a heat exchanger (30) configured to recover part of the thermal energy from the exhaust gases exiting the free turbine (24a, 24b),
**characterized in that** the propulsion system comprises at least one computer (28a, 28b), configured to control the two turboshaft engines and to limit the acceleration and deceleration of the first turboshaft engine (14a) when neither of the turboshaft engines is broken down, so as to limit the power transients at the heat exchanger (30),
and **in that** the acceleration and deceleration limits imposed by the computer (28a, 28b) on the first turboshaft engine (14a), when none of the turboshaft engines has failed, are predefined in relation to the heat exchanger (30) so as to limit the thermal and mechanical stresses in the latter.

2. The propulsion system according to claim 1, **characterized in that** the acceleration and deceleration limits are predefined as a function of the dimensioning and mechanical strength of the heat exchanger (30).

3. The propulsion system according to claim 1 or 2, **characterized in that** the acceleration and deceleration limits predefined as a function of the heat exchanger (30) are lower than the physical acceleration and deceleration limits of the first turboshaft engine (14a), and the heat exchanger (30) is unable to withstand without degradation the power transients corresponding to said physical limits.

4. The propulsion system according to any of the preceding claims, **characterized in that** the computer (28a, 28b) imposes on the first turboshaft engine (14a) acceleration and deceleration stops corresponding to physical acceleration and deceleration limits of the first turboshaft engine (14a) beyond which the turboshaft engine is susceptible to pumping or flameout, and the acceleration and deceleration limits for limiting the power transients at the heat exchanger (30) are less than said acceleration and deceleration stops.

5. The propulsion system according to one of the preceding claims, **characterized in that** it comprises an electric motor (38) connected to the second turboshaft engine (14b) and configured to assist the second turboshaft engine (14b) during an acceleration, starting and/or standby exit phase.

6. The propulsion system according to one of the preceding claims, **characterized in that** each turboshaft engine comprises:
- a gas generator comprising a compressor (16a, 16b) and a turbine (18a, 18b) connected by a shaft (20a, 20b), and a combustion chamber (22a, 22b) receiving air compressed by the compressor (16a, 16b) and burning an air/fuel mixture to form a gas transmitted to the turbine (18a, 18b) of the gas generator,
- the free turbine (24a, 24b) driven in rotation by the gas generator and integral with an output shaft (26a, 26b), said output shaft being connected to the main gearbox (12),
and **in that** the heat exchanger (30) is configured to heat the air compressed by the compressor (16a) of the first turboshaft engine (14a) via the recovered thermal energy portion.

7. The propulsion system according to one of the preceding claims, **characterized in that** each turboshaft engine comprises an exhaust nozzle, the heat exchanger (30) being configured to recover part of the thermal energy from the exhaust gases at the exhaust nozzle of the first turboshaft engine (14a).

8. The propulsion system according to one of the preceding claims, **characterized in that** the heat exchanger (30) is configured to recover part of the thermal energy from the exhaust gases of both turboshaft engines (14a, 14b).

9. The propulsion system according to one of the preceding claims, comprising N turboshaft engines connected to the main gearbox, N being an integer greater than or equal to 3, each turboshaft engine comprising a free turbine,
wherein at least one turboshaft engine among the N turboshaft engines, referred to as the first turboshaft engine, comprises a heat exchanger configured to recover part of the thermal energy from the exhaust gases exiting the free turbine,
and in that the computer is configured to control the N turboshaft engines and to limit the acceleration and deceleration of said first turboshaft engine when none of the N turboshaft engines is broken down, so as to limit the power transients at the heat exchanger.

10. The propulsion system according to claim 9, **characterized in that** it comprises an electric motor connected to at least one other turboshaft engine, referred to as the second turboshaft engine, and configured to assist said second turboshaft engine during an acceleration, starting and/or standby exit phase.

11. A method for managing a propulsion system (10) according to one of claims 1 to 10, **characterized in that** it comprises the following steps:
- a step of controlling the energy supplied by the first turboshaft engine (14a) and the second turboshaft engine (14b) so as to ensure the propulsive energy requirements,
- during a cruise flight of the aircraft, a step of shutdown or standby of the second turboshaft engine (14b), so that the first turboshaft engine (14a) provides all the propulsive energy,
- a restart or standby exit step of the second turboshaft engine (14b) if it is shut down or in standby and the energy supplied by the first turboshaft engine (14a) is no longer sufficient to meet the propulsive energy requirements.

12. The management method according to claim 11, **characterized in that** the restart or standby exit step comprises a step of assistance by an electric motor (38) connected to the second turboshaft engine (14b).
